# EUROPEAN PATENT SPECIFICATION

(11) **EP 3 099 750 B1**
(45) Date of publication and mention of the grant of the patent: **01.01.2020**
(21) Application number: 15704238.3
(22) Date of filing: 30.01.2015
(51) Int. Cl.: C09D 11/00, C09D 11/30, C09D 11/38

(54) **INK COMPOSITION**
TINTENZUSAMMENSETZUNG
COMPOSITION D'ENCRE

(30) Priority: 31.01.2014 EP 14153423
(43) Date of publication of application: 07.12.2016
(73) Proprietor: OCE-Technologies B.V., 5914 CA Venlo (NL)
(72) Inventor: SUILEN, Frederik L.E.M., NL-5914 CA Venlo (NL)
(74) Representative: OCE IP Department
(86) International application number: PCT/EP2015/051927
(87) International publication number: WO 2015/114095

(56) References cited:
- EP-A1- 0 924 272
- JP-A- 2012 180 425
- US-A- 5 133 803
- US-A- 5 626 655
- US-A- 6 086 198
- US-A1- 2006 290 759

## Description

### FIELD OF THE INVENTION

The present invention relates to an aqueous ink composition having gelling properties, suitable for use in an inkjet printing process. The invention further relates to a method of printing such an ink.

### BACKGROUND ART

In inkjet printing, print quality is strongly influenced by the viscosity of the jetted ink droplets and the change of viscosity of a jetted ink droplet between the moment the ink droplet leaves the printing device and the moment of landing on the surface of a receiving medium.

US 5,133,803, EP 0924272, US 5,626,655, US 20060290759, US 6,086,198 and JP2012180425 describe inks for inkjet printing.

A low viscosity of an ink droplet after landing on the surface of a receiving medium is beneficial for fast and good spreading of the ink droplet on the receiving medium. However, a disadvantage of an ink having a low viscosity is that when porous and/or thin receiving media are used, the low viscous ink may penetrate through the medium and become visible at the opposite side of the receiving medium (show through).

Low viscosity inks may also suffer from (inter color) bleeding, leading to unsharp images.

When non-absorbing or less absorbing receiving media are used, a low viscosity ink may cause coalescence and puddling of ink droplets, leading to inferior image quality because the printed dots are not present at the intended location on the receiving medium.

These disadvantages can be solved or at least mitigated if the viscosity of an ink droplet can be controllably raised at the right time during spreading of the ink droplet and absorption into the receiving medium.

It is generally known that viscosity of a liquid system depends on temperature, in particular that the viscosity increases with decreasing temperature.

Conventionally in inkjet practice the above described temperature dependence of the viscosity of the ink is too small for improving the image quality by for example controlling the temperature of the imaging device (print head) and/or the temperature of the receiving medium. Moreover, the print quality strongly depends on the selected receiving medium.

A known way of enhancing the above described viscosity behavior of an ink as a function of temperature is introducing a gelling property in the ink composition, in particular a thermo-reversible gelling property. Thermo-reversible gelling inks are known in the art to be used for controlling ink drop spreading on a recording medium. In particular gelling hotmelt inks and gelling radiation curable inks are known.

Gelling of aqueous systems is also known from the art. Examples of aqueous gelled systems are hydrogels of gelatin, pectin, solutions of polyvinylalcohols or polyacrylate derivatives. Only a limited number of these hydrogels show thermo-reversible gelling behavior. The known hydrogels comprise polymeric gelling agents.

A disadvantage of aqueous gelling systems comprising polymeric gelling agents is that the gelling is too slow to be of use in controlling the flow properties of an ink dot in a high speed/frequency printing process.

It is another disadvantage that polymeric gelling agents increase the basic level of the viscosity of the ink composition, hence limiting the design freedom of an ink composition in respect of the viscosity working range of an imaging device.

Yet another disadvantage of polymeric gelling agents is that unwanted non-linear rheological effects such as shear thinning, shear thickening and yield stress (Bingham behavior) may be introduced in the ink composition containing such polymeric gelling agent. These rheological effects can cause all kinds of problems in an imaging device, such as a limited or disturbed ink supply from an ink storage tank and influence the drop formation process.

It is therefore an object of the present invention to provide an aqueous ink composition that does not have the above described disadvantages. Such an ink composition will have thermo-reversible gelling properties and have a low viscosity at jetting conditions.

### SUMMARY OF THE INVENTION

The object is at least partly achieved by providing an aqueous ink composition comprising a low molecular weight gelling agent, being an organic amine oxide selected from the group consisting of C14-C22 alkylamine oxides, wherein the molecular weight of the gelling agent is between 200 gr/mol and 700 gr/mol, wherein the ink composition comprises dispersed polymer particles.

The ink composition preferably has a gelling temperature T₁ and a gelling temperature window ΔT₁, wherein the ink composition has a first viscosity at a temperature below T₁-0.5* ΔT₁, which is larger than 10 mPas, preferably larger than 20 mPas, more preferably larger than 30 mPas and wherein the ink composition has a second viscosity at a temperature above T₁+0.5* ΔT₁ which is smaller than 10 mPas, preferably smaller than 8 mPas, more preferably smaller than 6 mPas. A low molecular weight gelling agent, in particular a gelling agent having a molecular weight between 200 gr/mol and 700 gr/mol has a negligible to small effect on the viscosity of the ink composition, in particular at jetting conditions.

The ink compositions according to the present invention enable controlling the flow properties of a water based inkjet ink by controlling the temperature of the ink. In general, ink compositions show an increasing viscosity with decreasing temperature. Ink compositions according to the present invention comprise a basic ink composition and a low molecular gelling agent and show an enhanced increase of the viscosity with decreasing temperature. In particular the viscosity increase of an ink composition according to the present invention with decreasing temperature is enhanced by a factor of 2 or more, preferably 3 or more, more preferably 5 or more, for example between 10 and 150 in a temperature window of between 1°C and 30°C, preferably between 2°C and 20°C, more preferably between 5°C and 10°C, relative to the increase in viscosity of the basic ink composition (i.e. the same ink composition excluding the low molecular gelling agent) in said temperature window. The temperature window in the context of the present invention is defined as the *width* of a temperature range in which the viscosity of the ink composition changes (i.e. increases with decreasing temperature). Said temperature window is hereinafter referred to as "gelling temperature window". A gelling temperature in the context of the present invention is a temperature in the center of the gelling temperature window. For example, a gelling temperature window of 10°C at 25°C means that upon cooling from e.g. 35°C (jetting temperature) to 15°C (substrate temperature), the viscosity of the ink composition increases when the temperature of the ink composition passes through the temperature window of between 20°C and 30°C. By controlling the temperature of the imaging device (print head) and/or the receiving substrate print artifacts such as feathering, show through, coalescence and puddling can be prevented or at least mitigated.

An advantage of ink compositions according to the present invention is that print productivity can be increased and more economic print strategies (less printing swaths) can be used without compromising the desired print quality.

The invention can be used in any kind of ink, in particular homogeneous aqueous dye based inks and heterogeneous inks like pigment based aqueous inks, in latex (i.e. comprising dispersed polymer particles) based inks and in aqueous radiation curable (UV) inks.

The ink composition according to the present invention is suitable for being used in an ink jet process.

Inks according to the present invention enable printing on a wide range of receiving substrates while preventing or at least mitigating the above described print artifacts: e.g. on fast absorbing recording media such as plain paper and textile uncontrolled spreading and absorption can be prevented by gelling the ink. On non-absorbing receiving substrates, such as vinyl- or polypropylene films, glass, metals, uncontrolled spreading and hence (inter color) bleeding can be prevented or at least mitigated. Without wanting to be bound to any theory, it is thought that when ink drops on such substrates come into contact with each other due to (excessive) spreading, they tend to reduce their surface (liquid-air interface), hence such drops tend to merge into each other. The increase of the viscosity in accordance with the present invention counteracts the spreading behavior and hence may prevent or at least mitigate said merge of ink drops.

The gelling effect can also be used to control the gloss level of the print or to create relief in the print (e.g. Braille printing, security printing, etc).

T₁ is in a range of between 20°C and 50°C, preferably in a range of between 25°C and 45°C, more preferably between 30°C and 40°C, and wherein ΔT₁ is smaller than 15°C, preferably smaller than 10°C, more preferably smaller than 5°C.

The gelling agent is an organic alkylamine oxide gelling agent, preferably octadecyl dimethyl amine oxide.

In an embodiment, the gelling agent is present in an amount of between 0.1 weight% and 2 weight%, preferably between 0.2 weight% and 1.5 weight%, more preferably between 0.5 weight% and 1.0 weight% relative to the total ink composition

Due to the low concentration of the gelling agent which is required to obtain the desired thermo-reversible gelling effect, other ink properties and print aspects are not affected or only to a very minor and negligible extent.

In an embodiment, the aqueous ink composition according to the present invention comprises at least one salt containing an cation selected from the group consisting of: lithium, sodium, potassium, ammonium and substituted ammonium.

In an embodiment the at least one salt contains a anion selected from the group consisting of fluoride, chloride, bromide, iodide, sulfate, nitrate, phosphate, organic carboxylates, organic sulfonates and organic sulfates.

In an embodiment, the salt is NaCl and/or, NaOAc of which NaCl is preferred.

With the addition of a salt in accordance with this embodiment, the viscosity increase factor and the gelling temperature can be influenced. Thus the rheological properties of the ink can be designed.

In an embodiment, the salt is present in an amount of between 0.05 weight% and 1,5 weight%, preferably between 0.1 weight% and 1.0 weight%, more preferably between 0.2 weight% and 0.8 weight% relative to the total ink composition.

In an embodiment, the aqueous ink composition according to the present invention comprises a colorant selected from the group consisting of pigments and dyes and combinations thereof.

In an embodiment, the aqueous ink composition according to the present invention comprises one or more additives, for example cosolvents, penetrants, surfactants, biocides, fragrant, organic cells, tracers, markers, DNA, metal particles.

In an embodiment, the aqueous ink composition according to the present invention comprises a polyether modified silicone surfactant.

The aqueous ink composition according to the present invention comprises dispersed polymer particles. The aqueous ink composition according to this embodiment is a thermo-reversible gelling latex ink composition, provided that the gelling temperature and gelling window are in a working range of the aqueous latex ink. For example, the gelling temperature is in a range of between 15°C and 85°C, preferable between 20°C and 70°C, more preferably between 25°C and 55°C.

In another aspect, the invention pertains to the use of a low molecular gelling agent in an aqueous ink composition, preferably an organic amine oxide having a molecular weight of between 200 gr/mol and 700 gr/mol, preferably a C14-C22 alkylamine oxide, for example octadecyl dimethyl amine oxide.

In an embodiment, the low molecular gelling agent is used in an aqueous ink composition in an amount of between 0.1 weight% and 2 weight% relative to the total ink composition.

In an embodiment, the low molecular gelling agent is used in an aqueous ink composition in combination with a salt containing at least one cation selected from the group consisting of lithium, sodium, potassium, ammonium and substituted ammonium. Preferably the salt contains at least one anion selected from the group consisting of fluoride, chloride, bromide, iodide, sulfate, nitrate, phosphate, organic carboxylates, organic sulfonates and organic sulfates. More preferably the salt is NaCl.

The salt may be present in an amount of between 0.05 weight% and 1.5 weight% relative to the total ink composition.

In an embodiment, the low molecular gelling agent is used in an aqueous ink composition in combination with a colorant selected from the group consisting of pigments and dyes and combinations thereof and/or one or more additives selected from the group of cosolvents, penetrants and surfactants, for example a polyether modified surfactant.

In an embodiment, the low molecular gelling agent is used in an aqueous ink composition in combination with dispersed polymer particles. Such an ink composition is also termed a latex ink composition.

In yet another aspect of the invention, the invention relates to a printing method in which an ink according to the present invention is used, the method comprises the steps of:
1. Providing an ink composition according to the present invention, the ink composition having a gelling temperature T₁ and a gelling temperature window ΔT₁;
2. heating an imaging device containing the ink composition to a jetting temperature T₂, wherein T₂ satisfies the condition T₂≥T₁+0.5*ΔT₁;
3.controlling the temperature of a receiving substrate at a temperature T₃, wherein T₃ satisfies the condition T3≤T₁-0.5*ΔT₁;
4.imagewise expelling ink droplets from the jetting device onto the temperature controlled recording substrate.

In step 1 an ink according to the present invention is provided, for example an ink having a gelling temperature of 37°C and a gelling temperature window of 6°C.

In step 2 the imaging device containing the ink is brought at a temperature above the upper limit of the gelling temperature window, e.g. for the above disclosed ink, the upper limit of the gelling temperature window is 40°C. The imaging device containing the ink is for example heated to 45°C. At equilibrium, the ink in the imaging device adopts the same temperature. At this temperature, the ink is in an 'un-gelled' state and the viscosity of is low (e.g. 1-5 mPas). At this temperature the ink composition show Newtonian rheological behavior and has a surface tension of between 20-30 N/m.

In step 4 ink droplets are being expelled from the imaging device at the selected jetting temperature (e.g. at 45°C).

Upon landing on the temperature controlled receiving substrate, which may be cooled or heated, e.g. by using a temperature controlled platen as a print surface onto which the receiving substrate is held during printing, ink droplets start to spread and to cool down. The temperature controlled platen may comprise a heat exchanger that is able to cool and also to heat the print surface. During cooling down of the ink dots on the print medium (while spreading) the temperature of the ink composition decreases gradually and when the temperature of the ink dots enters the gelling temperature window of the ink composition, the ink composition starts to gel and the viscosity starts to rise. The rise in viscosity hinders the spreading of the ink dots and where applicable the absorption of the ink into the receiving substrate.

In an embodiment, the difference between the temperature of the receiving substrate temperature T₃ and the jetting temperature T₂, ΔT₂ = T₂-T₃ is used to control the amount of spreading of the ink dots on the receiving medium.

Because spreading is mainly determined by the viscosity and the surface tension of the ink composition, the speed of spreading can be controlled by controlling the speed at which the viscosity of the ink composition changes (i.e. increases once an ink droplet has landed on the receiving substrate). Without wanting to be bound to any theory it is thought that if the jetting temperature is selected to be relatively far above the upper limit of the gelling temperature window, gelling of the ink droplet may be delayed until the temperature of the ink droplet enters the gelling temperature window and the ink droplet may show more spreading on the receiving medium than in cases where the jetting temperature is selected to be close to the upper limit of the gelling temperature window. This spreading enhancing effect may be counteracted by selecting a substrate temperature well below the lower limit of the gelling temperature window. In such cases the driving force for cooling the ink droplet that has just landed on the surface of the receiving substrate is relatively large, implying a relatively high cooling rate. The temperature of the ink droplet hence enters the gelling temperature window more quickly and the ink composition starts gelling more quickly. Hence the total spreading of the ink droplet is reduced.

### BRIEF DESCRIPTION OF THE DRAWINGS

The present invention will become more fully understood from the detailed description given herein below and accompanying schematical drawings which are given by way of illustration only and are not limitative of the invention, and wherein:
Fig. 1 shows a schematic representation of an inkjet printing system.
Fig. 2 Graphical representation of the temperature dependency of the viscosity of an ink composition according to an embodiment of the present invention, compared to the temperature dependency of the viscosity of a basic ink composition.
Fig. 3 Graphical representation of the temperature dependency of the viscosity of an ink composition according to an embodiment of the present invention.
Fig. 4 Graphical representation of the temperature dependency the viscosity of an ink composition according to an embodiment of the present invention.

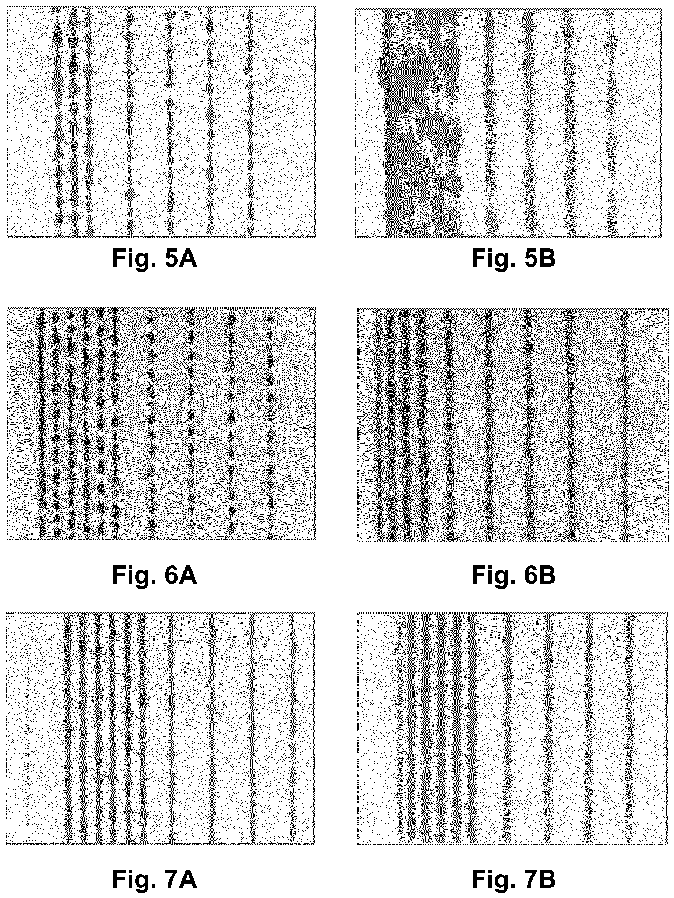

Fig. 5 Photograph of a print sample with a prior art ink printed on A) IJM 614 and B) UPM Gloss.
Fig. 6 Photograph of a print sample with an ink according to an embodiment of the present invention on A) IJM 614 and B) UPM Gloss.
Fig7 Photograph of a print sample with an ink according to an embodiment of the present invention on A) IJM 614 and B) UPM Gloss.

### DETAILED DESCRIPTION

### Ink composition

An ink composition according to the present invention comprises water; a functional component such as a colorant; and a low molecular weight gelling agent. The ink composition may further comprise a soluble polymer, a dispersion of resin particles in water (i.e. a latex), a co-solvent fraction and other additives like penetrants and surfactants. The components of the inks will be described in detail in the next sections.

### Colorant

The colorant may be a pigment or a mixture of pigments, a dye or a mixture of dyes or a mixture comprising pigments and dyes.

In the inkjet ink according to the present invention, a pigment is primarily used as a water-dispersible colorant in view of the weatherability, and, for the purpose of controlling color tone, a dye may be contained within the range not impairing the weatherability. The pigment is not particularly limited and may be suitably selected in accordance with the intended use.

Specific pigments which are preferably usable are listed below.

Examples of pigments for magenta or red include: C.I. Pigment Red 1, C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 17, C.I. Pigment Red 22, C.I. Pigment Red 23, C.I. Pigment Red 31, C.I. Pigment Red 38, C.I. Pigment Red 48:1, C.I. Pigment Red 48:2 (Permanent Red 2B(Ca)), C.I. Pigment Red 48:3, C.I. Pigment Red 48:4, C.I. Pigment Red 49:1, C.I. Pigment Red 52:2; C.I. Pigment Red 53:1, C.I. Pigment Red 57:1 (Brilliant Carmine 6B), C.I. Pigment Red 60:1, C.I. Pigment Red 63:1, C.I. Pigment Red 64:1, C.I. Pigment Red 81. C.I. Pigment Red 83, C.I. Pigment Red 88, C.I. Pigment Red 101(colcothar), C.I. Pigment Red 104, C.I. Pigment Red 106, C.I. Pigment Red 108 (Cadmium Red), C.I. Pigment Red 112, C.I. Pigment Red 114, C.I. Pigment Red 122 (Quinacridone Magenta), C.I. Pigment Red 123, C.I. Pigment Red 139, C.I. Pigment Red 44, C.I. Pigment Red 146, C.I. Pigment Red 149, C.I. Pigment Red 166, C.I. Pigment Red 168, C.I. Pigment Red 170, C.I. Pigment Red 172, C.I. Pigment Red 177, C.I. Pigment Red 178, C.I. Pigment Red 179, C.I. Pigment Red 185, C.I. Pigment Red 190, C.I. Pigment Red 193, C.I. Pigment Red 209, C.I. Pigment Red 219 and C.I. Pigment Red 222, C.I. Pigment Violet 1 (Rhodamine Lake), C.I. Pigment Violet 3, C.I. Pigment Violet 5:1, C.I. Pigment Violet 16, C.I. Pigment Violet 19, C.I. Pigment Violet 23 and C.I. Pigment Violet 38.

Examples of pigments for orange or yellow include: C.I. Pigment Yellow 1, C.I. Pigment Yellow 3, C.I. Pigment Yellow 12, C.I. Pigment Yellow 13, C.I. Pigment Yellow 14, C.I. Pigment Yellow 15, C.I. Pigment Yellow 15:3, C.I. Pigment Yellow 17, C.I. Pigment Yellow 24, C.I. Pigment Yellow 34, C.I. Pigment Yellow 35, C.I. Pigment Yellow 37, C.I. Pigment Yellow 42 (yellow iron oxides), C.I. Pigment Yellow 53, C.I. Pigment Yellow 55, C.I. Pigment Yellow 74, C.I. Pigment Yellow 81, C.I. Pigment Yellow 83, C.I. Pigment Yellow 93, C.I. Pigment Yellow 94, C.I. Pigment Yellow 95, C.I. Pigment Yellow 97, C.I. Pigment Yellow 98, C.I. Pigment Yellow 100, C.I. Pigment Yellow 101, C.I. Pigment Yellow 104, C.I. Pigment Yellow 408, C.I. Pigment Yellow 109, C.I. Pigment Yellow 110, C.I. Pigment Yellow 117, C.I. Pigment Yellow 120, C.I. Pigment Yellow 128, C.I. Pigment Yellow 138, C.I. Pigment Yellow 150, C.I. Pigment Yellow 151, C.I. Pigment Yellow 153 and C.I. Pigment Yellow 183; C.I. Pigment Orange 5, C.I. Pigment Orange 13, C.I. Pigment Orange 16, C.I. Pigment Orange 17, C.I. Pigment Orange 31, C.I. Pigment Orange 34, C.I. Pigment Orange 36, C.I. Pigment Orange 43, and C.I. Pigment Orange 51.

Examples of pigments for green or cyan include: C.I. Pigment Blue 1, C.I. Pigment Blue 2, C.I. Pigment Blue 15, C.I. Pigment Blue 15:1, C.I. Pigment Blue 15:2, C.I. Pigment Blue 15:3 (Phthalocyanine Blue), C.I. Pigment Blue 16, C.I. Pigment Blue 17:1, C.I. Pigment Blue 56, C.I. Pigment Blue 60, C.I. Pigment Blue 63, C.I. Pigment Green 1, C.I. Pigment Green 4, C.I. Pigment Green 7, C.I. Pigment Green 8, C.I. Pigment Green 10, C.I. Pigment Green 17, C.I. Pigment Green 18 and C.I. Pigment Green 36.

In addition to the above pigments, when red, green, blue or intermediate colors are required, it is preferable that the following pigments are employed individually or in combination thereof. Examples of employable pigments include: C.I. Pigment Red 209, 224, 177, and 194, C.I. Pigment Orange 43, C.I. Vat Violet 3, C.I. Pigment Violet 19, 23, and 37, C.I. Pigment Green 36, and 7, C.I. Pigment Blue 15:6.

Further, examples of pigments for black include: C.I. Pigment Black 1, C.I. Pigment Black 6, C.I. Pigment Black 7 and C.I. Pigment Black 11. Specific examples of pigments for black color ink usable in the present invention include carbon blacks (e.g., furnace black, lamp black, acetylene black, and channel black); (C.I. Pigment Black 7) or metal-based pigments (e.g., copper, iron (C.I. Pigment Black 11), and di-titanium-tri-oxide; and organic pigments (e.g., aniline black (C.I. Pigment Black 1).

The amount of the colorant contained in the inkjet ink, as a solid content, is preferably 0.5 weight% to 15 weight%, more preferably 0.8 weight% to 10 weight%, and even more preferably between 1 weight% and 6 weight%. When the amount of the water-insoluble pigment is less than 0.5 weight%, the color developing ability and image density of the ink may degrade. When it is more than 15 weight%, unfavorably, the viscosity of the ink is increased, causing a degradation in ink ejection stability.

### Gelling agent

Gelling agents used in ink compositions according to the present invention are low molecular weight gelling agents.

Examples of such gelling agents comprise alkylamine oxides, in particular C14-C22 alkylamine oxides such as hexadecyl dimethyl amine oxide and octadecyl dimethyl amine oxide.,

Other examples of such gelling agents are distearyl methyl amine oxide, dihexadecyl methyl amine oxide, stearyl amine oxide.

### Dispersion of resin particles

The inkjet ink according to the present invention contains a water-dispersible resin in view of the pigment fixability to recording media. As the water-dispersible resin, a water-dispersible resin excellent in film formability (image formability) and having high water repellency, high waterfastness, and high weatherability is useful in recording images having high waterfastness and high image density (high color developing ability).

Examples of the water-dispersible resin include synthetic resins and natural polymer compounds.

Examples of the synthetic resins include polyester resins, polyurethane resins, polyepoxy resins, polyamide resins, polyether resins, poly(meth)acrylic resins, acryl-silicone resins, fluorine-based resins, polyolefin resins, polystyrene-based resins, polybutadiene-based resins, polyvinyl acetate-based resins, polyvinyl alcohol-based resins, polyvinyl ester-based resins, polyvinyl chloride-based resins, polyacrylic acid-based resins, unsaturated carboxylic acid-based resins and copolymers such as styrene - acrylate copolymer resins, styrene-butadiene copolymer resins.

Examples of the natural polymer compounds include celluloses, rosins, and natural rubbers.

Examples of commercially available water-dispersible resin emulsions include: Joncryl 537 and 7640 (styrene-acrylic resin emulsion, made by Johnson Polymer Co., Ltd.), Microgel E-1002 and E-5002 (styrene-acrylic resin emulsion, made by Nippon Paint Co., Ltd.), Voncoat 4001 (acrylic resin emulsion, made by Dainippon Ink and Chemicals Co., Ltd.), Voncoat 5454 (styrene-acrylic resin emulsion, made by Dainippon Ink and Chemicals Co., Ltd.), SAE-1014 (styrene-acrylic resin emulsion, made by Zeon Japan Co., Ltd.), Jurymer ET-410 (acrylic resin emulsion, made by Nihon Junyaku Co., Ltd.), Aron HD-5 and A-104 (acrylic resin emulsion, made by Toa Gosei Co., Ltd.), Saibinol SK-200 (acrylic resin emulsion, made by Saiden Chemical Industry Co., Ltd.), and Zaikthene L (acrylic resin emulsion, made by Sumitomo Seika Chemicals Co., Ltd.), acrylic copolymer emulsions of DSM Neoresins, e.g. the NeoCryl product line, in particular acrylic styrene copolymer emulsions NeoCryl A-662, NeoCryl A-1131, NeoCryl A-2091, NeoCryl A-550, NeoCryl BT-101, NeoCryl SR-270, NeoCryl XK-52, NeoCryl XK-39, NeoCryl A-1044, NeoCryl A-1049, NeoCryl A-1110, NeoCryl A-1120, NeoCryl A-1127, NeoCryl A-2092, NeoCryl A-2099, NeoCryl A-308, NeoCryl A-45, NeoCryl A-615, NeoCryl BT-24, NeoCryl BT-26, NeoCryl BT-26, NeoCryl XK-15, NeoCryl X-151, NeoCryl XK-232, NeoCryl XK-234, NeoCryl XK-237, NeoCryl XK-238-NeoCryl XK-86, NeoCryl XK-90 and NeoCryl XK-95 However, the water-dispersible resin emulsion is not limited to these examples.

The content of the water-dispersible resin added in the ink of the present invention is preferably from 1 - 40 weight% based on the total weight of the ink, and it is more preferably from 1.5 - 30 weight%, and it is still more preferably from 2 - 25 weight%. Even more preferably, the amount of the water-dispersible resin contained in the inkjet ink, as a solid content, is 2.5 weight% to 15 weight%, and more preferably 3 weight% to 7 weight%, relative to the total ink composition.

In an embodiment, the ink composition according to the present invention comprises two or more water-dispersible resins selected from the above cited synthetic resins, synthetic copolymer resins and natural polymer compounds in admixture with each other.

### Cosolvent fraction

As a solvent of the ink, for the purposes of improving the ejection property of the ink or adjusting the ink physical properties, the ink preferably contains a water soluble organic solvent in addition to water. As long as the effect of the present invention is not damaged, there is no restriction in particular in the type of the water soluble organic solvent.

Examples of the water-soluble organic solvent include polyhydric alcohols, polyhydric alcohol alkyl ethers, polyhydric alcohol aryl ethers, nitrogen-containing heterocyclic compounds, amides, amines, ammonium compounds, sulfur-containing compounds, propylene carbonate, and ethylene carbonate.

Examples of the solvent include: glycerin (also termed glycerol), propylene glycol, dipropylene glycol, tripropylene glycol, tetrapropylene glycol, polypropylene glycol, ethylene glycol, diethylene glycol, triethylene glycol, tetraethylene glycol, polyethylene glycols preferably having a molecular weight of between 200 gram/mol and 1000 gram/mol (e.g. PEG 200, PEG 400, PEG 600, PEG 800, PEG 1000), glycerol ethoxylate, petaerythritol ethoxylate, polyethylene glycol (di)methylethers preferably having a molecular weight of between 200 gram/mol and 1000 gram/mol, tri-methylol-propane, diglycerol (diglycerin), trimethylglycine (betaine), N-methylmorpholine N-oxide, decaglyserol, 1,4-butanediol, 1,3-butanediol, 1,2,6-hexanetriol, 2-pyrrolidinone, dimethylimidazolidinone, ethylene glycol mono-butyl ether, diethylene glycol monomethyl ether, diethylene glycol monoethyl ether, diethylene glycol mono-propyl ether, diethylene glycol mono-butyl ether, triethylene glycol monomethyl ether, triethylene glycol monoethyl ether, triethylene glycol mono-propyl ether, triethylene glycol mono-butyl ether, tetraethylene glycol monomethyl ether, tetraethylene glycol monoethyl ether, propylene glycol mono-butyl ether, dipropylene glycol monomethyl ether, dipropylene glycol monoethyl ether, dipropylene glycol monopropyl ether, diethylene glycol monobutyl ether, tripropylene glycol monomethyl ether, tripropylene glycol monoethyl ether, tripropylene glycol monopropyl ether, tripropylene glycol monobutyl ether, tetrapropylene glycol monomethyl ether, diethylene glycol diethyl ether, diethylene glycol dibutyl ether, triethylene glycol diethyl ether, triethylene glycol dibutyl ether, dipropylene glycol dibutyl ether, tri propylene glycol dibutyl ether, 3-methyl 2,4-pentanediol, diethylene-glycol-monoethyl ether acetate, 1,2-hexanediol, 1,2-pentanediol and 1,2-butanediol.

The total amount of the water-soluble organic solvent contained in the ink composition is not particularly limited. It is, however, preferably 0 weight% to 75 weight%, and more preferably 10 weight% to 70 weight%, and even more preferably 15 weight% to 60 weight% with respect to the total ink composition. When the amount of the water-soluble organic solvent is more than 80 weight%, the drying times of the ink compositions are too long. When the amount is less than 10 weight%, water in the ink compositions may evaporate more quickly, which may significantly reduce the stability of the ink composition.

### Other additives

It is preferable that the ink of the present invention contains a surfactant in order to improve an ink ejection property and/or the wettability of the surface of a recording medium, and the image density and color saturation of the image formed and reducing white spots therein. To improve the spreading of the ink on the surface of recording medium and to reduce puddling, it is preferable to adjust the dynamic surface tension (measured at 10 Hz) of the ink composition to 35 mN/m or lower, preferably to 34 nN/m or lower, more preferably to 33 mN/m or lower, even more preferably to 32 mN/m or lower by the surfactant. The static surface tension of the ink composition is preferably below 30 mN/m (measured at 0.1 Hz). Examples of surfactants are not specifically limited and are well known in the art.

Examples of the commercially available polyether modified silicone surfactants include KF-618, KF-642 and KF-643 (produced by Shin-Etsu Chemical Co., Ltd.); EMALEX-SS-5602 and SS- 1906EX (produced by Nihon Emulsion Co., Ltd.); FZ-2105, FZ-2118, FZ-2154, FZ-2161, FZ-2162, FZ-2163 and FZ-2164 (produced by TORAY Dow Corning Silicone Co., Ltd.); and BYK-33, BYK 331, BYK 341, BYK 348, BYK 349, BYK 3455, BYK-387 (produced by BYK Chemie GmbH); Tegowet 240, Tegowet 245, Tegowet 250, Tegowet 260 (produced by Evonik); Silwet L-77 (produced by Sabic).

### Receiving media

Suitable receiving media for use in a printing process using an ink or set of inks (Cyan, Magenta, Yellow and blacK, CMYK) according to the present invention are not particularly limited to any type. The receiving medium may be suitably selected depending on the intended application.

Suitable receiving media may range from strongly water absorbing media such as plain paper (for example Océ Red Label) to non-water-absorbing media such as plastic sheets (for example PE, PP, PVC and PET films). To optimize print quality, inkjet coated media are known, which media comprise a highly water absorbing coating.

Of particular interest in the context of the present invention are Machine Coated (MC) media (also known as offset coated media) and glossy (coated) media. MC media are designed for use in conventional printing processes, for example offset printing and show good absorption characteristics with respect to solvents used in inks used in such printing processes, which are usually organic solvents. MC and glossy media show inferior absorption behavior with respect to water (worse than plain paper, better than plastic sheets), and hence aqueous inks.

### Printing process

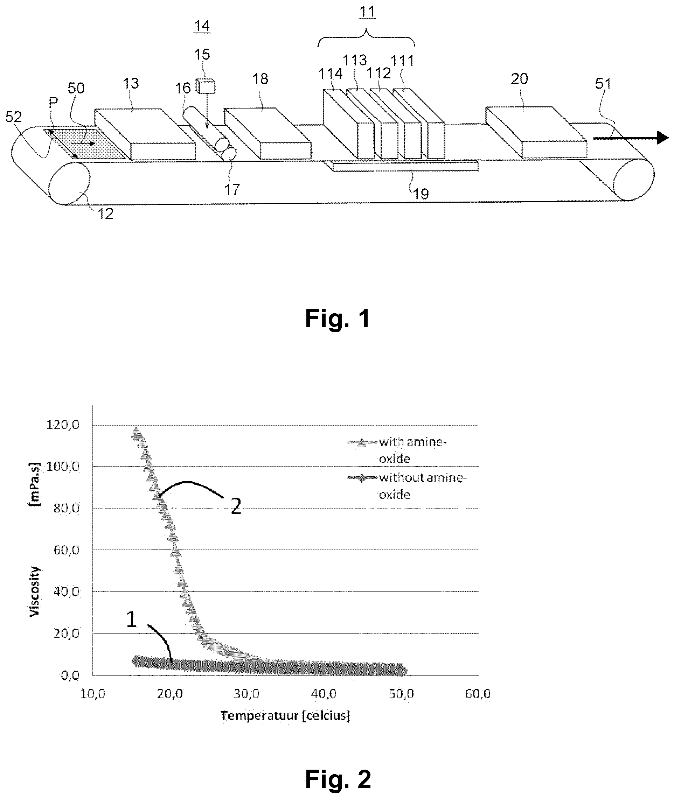

A printing process in which the inks according to the present invention may be suitably used is described with reference to the appended drawings shown in Fig. 1. Fig. 1 shows a schematic representation of an inkjet printing system

Fig. 1 shows that a sheet of a receiving medium, P, is transported in a direction for conveyance as indicated by arrows 50 and 51 and with the aid of transportation mechanism 12. Transportation mechanism 12 may be a driven belt system comprising one (as shown in Fig. 1) or more belts. Alternatively, one or more of these belts may be exchanged for one or more drums. A transportation mechanism may be suitably configured depending on the requirements (e.g. sheet registration accuracy) of the sheet transportation in each step of the printing process and may hence comprise one or more driven belts and/or one or more drums. For a proper conveyance of the sheets of receiving medium, the sheets need to be fixed to the transportation mechanism. The way of fixation is not particularly limited and may be selected from electrostatic fixation, mechanical fixation (e.g. clamping) and vacuum fixation. Of these vacuum fixation is preferred.

The printing process as described below comprises of the following steps: image formation and drying and fixing. Optionally the printing process comprises a media pre-treatment step and/or a post treatment step, the latter is not described here.

Fig. 1 shows that the sheet of receiving medium P may be conveyed to and passed through an optional pre-treatment module 13, which module may comprise a preheater, for example a radiation heater, a corona/plasma treatment unit, a gaseous acid treatment unit or a combination of any of the above. Optionally and subsequently, a predetermined quantity of the pre-treatment liquid is applied on the surface of the receiving medium P at pre-treatment liquid applying member 14. Specifically, the pre-treatment liquid is provided from storage tank 15 of the pre-treatment liquid to the pre-treatment liquid applying member 14 composed of double rolls 16 and 17. Each surface of the double rolls may be covered with a porous resin material such as sponge. After providing the pre-treatment liquid to auxiliary roll 16 first, the pre-treatment liquid is transferred to main roll 17, and a predetermined quantity is applied on the surface of the receiving medium P. Subsequently, the coated printing paper P on which the pre-treatment liquid was supplied may optionally be heated and dried by drying member 18 which is composed of a drying heater installed at the downstream position of the pre-treatment liquid applying member 14 in order to decrease the quantity of the water content in the pre-treatment liquid to a predetermined range. It is preferable to decrease the water content in an amount of 1.0 weight% to 30 weight% based on the total water content in the provided pre-treatment liquid provided on the receiving medium P.

### Image formation

Image formation is performed in such a manner that, employing an inkjet printer loaded with inkjet inks, ink droplets are ejected from the inkjet heads based on the digital signals onto a print medium.

Although both single pass inkjet printing and multi pass (i.e. scanning) inkjet printing may be used for image formation, single pass inkjet printing is preferably used since it is effective to perform high-speed printing. Single pass inkjet printing is an inkjet recording method with which ink droplets are deposited onto the receiving medium to form all pixels of the image by a single passage of a receiving medium underneath an inkjet marking module.

In Fig. 1, 11 represents an inkjet marking module comprising four inkjet marking devices, indicated with 111, 112, 113 and 114, each arranged to eject an ink of a different color (e.g. Cyan, Magenta, Yellow and blacK). The nozzle pitch of each head is e.g. about 360 dpi. In the present invention, "dpi" indicates a dot number per 2.54 cm.

An inkjet marking device for use in single pass inkjet printing, 111, 112, 113, 114, has a length, L, of at least the width of the desired printing range, indicated with double arrow 52, the printing range being perpendicular to the media transport direction, indicated with arrows 50 and 51. The inkjet marking device may comprise a single printhead having a length of at least the width of said desired printing range. The inkjet marking device may also be constructed by combining two or more inkjet heads, such that the combined lengths of the individual inkjet heads cover the entire width of the printing range. Such a constructed inkjet marking device is also termed a page wide array (PWA) of printheads.

In image formation by ejecting an ink, an inkjet head (i.e. printhead) employed may be either an on-demand type or a continuous type inkjet head. As an ink ejection system, there may be usable either the electric-mechanical conversion system (e.g., a single-cavity type, a double-cavity type, a bender type, a piston type, a shear mode type, or a shared wall type), or an electric-thermal conversion system (e.g., a thermal inkjet type, or a Bubble Jet type (registered trade name)). Among them, it is preferable to use a piezo type inkjet recording head which has nozzles of a diameter of 30 µm or less in the current image forming method.

Fig. 1 shows that after pre-treatment, the receiving medium P is conveyed to upstream part of the inkjet marking module 11. Then, image formation is carried out by each color ink ejecting from each inkjet marking device 111, 112, 113 and 114 arranged so that the whole width of the receiving medium P is covered.

Optionally, the image formation may be carried out while the receiving medium is temperature controlled. For this purpose a temperature control device 19 may be arranged to control the temperature of the surface of the transportation mechanism (e.g. belt or drum) underneath the inkjet marking module 11. The temperature control device 19 may be used to control the surface temperature of the receiving medium P, for example in the range of 10°C to 60°C. The temperature control device 19 may comprise heaters, such as radiation heaters, and a cooling means, for example a cold blast, in order to control the surface temperature of the receiving medium within said range. Subsequently and while printing, the receiving medium P is conveyed to the downstream part of the inkjet marking module 11.

### Drying and fixing

After an image has been formed on the receiving medium, the prints have to be dried and the image has to be fixed onto the receiving medium. Drying comprises the evaporation of solvents, in particular those solvents that have poor absorption characteristics with respect to the selected receiving medium.

Fig. 1 schematically shows a drying and fixing unit 20, which may comprise a heater, for example a radiation heater. After an image has been formed, the print is conveyed to and passed through the drying and fixing unit 20. The print is heated such that solvents present in the printed image, to a large extent water, evaporate. The speed of evaporation and hence drying may be enhanced by increasing the air refresh rate in the drying and fixing unit 20. Simultaneously, film formation of the ink occurs, because the prints are heated to a temperature above the minimum film formation temperature (MFT). The residence time of the print in the drying and fixing unit 20 and the temperature at which the drying and fixing unit 20 operates are optimized, such that when the print leaves the drying and fixing unit 20 a dry and robust print has been obtained. As described above, the transportation mechanism 12 in the fixing and drying unit 20 may be separated from the transportation mechanism of the pre-treatment and printing section of the printing apparatus and may comprise a belt or a drum.

Hitherto, the printing process was described such that the image formation step was performed in-line with the pre-treatment step (e.g. application of an (aqueous) pre-treatment liquid) and a drying and fixing step, all performed by the same apparatus (see Fig. 1). However, the printing process is not restricted to the above-mentioned embodiment. A method in which two or more machines are connected through a belt conveyor, drum conveyor or a roller, and the step of applying a pre-treatment liquid, the (optional) step of drying a coating solution, the step of ejecting an inkjet ink to form an image and the step or drying an fixing the printed image are performed. It is, however, preferable to carry out image formation with the above defined in-line image forming method.

### EXAMPLES

### Materials

### Ink components

Unless otherwise stated the raw materials (chemicals) are obtained from Sigma Aldrich and are used in the experiments as received.

### Media

The receiving substrates used in the experiments were: IJM 614 which is a polymeric vinyl white gloss medium obtained from Océ and Finesse Gloss, obtained from UPM.

### Experimental and Measurement methods

### Surface Tension

The surface tension is measured using a Sita bubble pressure tensiometer, model SITA online t60, according to the (maximum) bubble pressure method. The surface tension of the liquids to be tested (e.g. inks according to the present invention) is measured at 30°C unless otherwise indicated. The static surface tension is determined at a frequency of 0.1 Hz. The dynamic surface tension at 10 Hz.

### Viscosity

The viscosity (sweep) is measured using a Haake Rheometer, type Haake Rheostress RS 600, with a flat plate geometry in a temperature range from 50°C to 15°C, with a cooling rate of 2.33 °C/min (35°C/900 sec). The viscosity is measured at a shear rate (*γ̇* ) of 70 s⁻¹, unless otherwise indicated.

### Print experiments

All print experiments were performed with a FujiFilm Dimatix 10 pL printhead, model #DMC-11610.

### Preparation of ink compositions

### Example 1 : Ink composition according to the present invention

29.72 grams of pH=9 buffer (boric acid/KCI/NaOH, obtained from Merck); 34,28 grams of U9800 latex (35 weight% polyurethane aqueous latex obtained from Alberdingk Boley GmbH); 28.6 grams of Fuji K 10105 (14 weight% black pigment dispersion in water obtained from FujiFilm Imaging Colorants); 60 grams of 2-pyrrolidone (obtained from Sigma Aldrich); 16 grams of Ammonyx SO (a 25 weight% octadecyldimethylamine-oxide solution in water obtained from Stepan Company); and 31.4 grams of demineralized water were mixed in a vessel, stirred for approximately 60 minutes and filtered over a Pall Profile Star absolute glass filter having a pore size of 1µm.

The obtained ink composition comprises:
- 2 weight% octadecyldimethylamine-oxide;
- 2 weight% Fuji K 10105 pigment (solids);
- 6 weight% U9800 latex (solids)
- 30 weight% 2-pyrrolidone (cosolvent).

### Comparative example A: basic ink composition

Example 1 was repeated but without adding Ammonyx SO.

The obtained ink composition comprises:
- 2 weight% Fuji K 10105 pigment (solids);
- 6 weight% U9800 latex (solids)
- 30 weight% 2-pyrrolidone (cosolvent).

The rheological behavior of the ink compositions according to Example 1 and Comparative Example A have been determined in accordance with the method described above. The results are shown in Fig. 2. From Fig. 2 it can be seen that the basic ink composition according to comparative Example A shows a slight viscosity increase when the ink composition is cooled from 50°C to 15°C (curve 1). The viscosity does not exceed 10 mPas in the entire temperature range. The ink composition according to Example 1 (i.e. the basic ink composition of comparative example A and 2 weight% of octadecyldimethylamine-oxide added as gelling agent thereto) starts increasing in viscosity at around 32°C, and at around 25°C the viscosity of the ink according to Example 1 is roughly a factor 2 larger than the viscosity of the basic ink composition at that temperature. At 15°C this factor is approximately 12 (curve 2).

Therefore in a temperature window of 17°C (32°C to 15°C) the viscosity of the ink composition of Example 1 increases by a factor of 12 relative to the viscosity increase of the basic ink composition.

### Example 2: Ink composition according to the present invention

32 gram Ammonyx SO (a 25 weight% octadecyldimethylamine-oxide solution in water obtained from Stepan Company, 100 grams of dimethylisosorbide ether (obtained from Sigma Aldrich); 50 grams of Pro-jet Red OAM (obtained from Zeneca), 2.5 grams of NaCl and 815.5 grams of demineralized water were mixed in a vessel, stirred for approximately 60 minutes and filtered over a Pall Profile Star absolute glass filter having a pore size of 1µm.

The obtained ink composition comprises:
- 0.8 weight% octadecyldimethylamine-oxide;
- 10 weight% dimethylisosorbide ether;
- 5 weight% Pro-jet Red OAM (obtained from Zeneca);
- 0.25 weight% NaCl; and
- 83.95 weight% water.

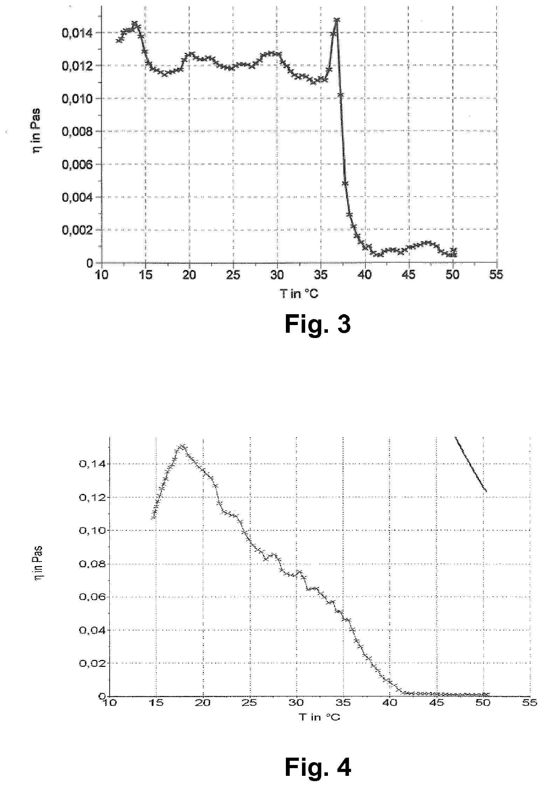

The gelling temperature of this ink composition is 37°C. The gelling temperature window is <5°C, see Figure 3. The viscosity at 25°C is approximately 12 mPas. The viscosity at 45°C is approximately 1 mPas. The ink according to this example shows a viscosity increase from 1 mPas to 12 mPas in a gelling temperature window of <5°C.

### Example 3: Ink composition according to the present invention

40 gram Ammonyx SO (a 25 weight% octadecyldimethylamine-oxide solution in water obtained from Stepan Company), 100 grams of 2-pyrrolidone (obtained from Sigma Aldrich); 100 grams of dimethylisosorbide ether (obtained from Sigma Aldrich); 2.5 grams of Tegowet 250 (a polyether siloxane surfactant obtained from Evonik); 50 grams of Pro-jet Red OAM (a dye obtained from Zeneca), 2.5 grams of NaCl and 705 grams of demineralized water were mixed in a vessel, stirred for approximately 60 minutes and filtered over a Pall Profile Star absolute glass filter having a pore size of 1µm.

The obtained ink composition comprises:
- 1.0 weight% octadecyldimethylamine-oxide;
- 10 weight% 2-pyrrolidone
- 10 weight% dimethylisosorbide ether;
- 0.25 weight% Tegowet 250
- 5 weight% Pro-jet Red OAM (obtained from Zeneca);
- 0.25 weight% NaCl; and
- 73.5 weight% water.

The gelling temperature of this ink composition is 41-42°C, see Figure 4. The viscosity at 25°C is approximately 90 mPas. The viscosity at 45°C is approximately 1 mPas. Figure 3 shows that at a temperature of 36-37°C the viscosity is approximately 40 mPas. The viscosity therefore increases from 1 mPas to 40 mPas in a temperature window of 5-7 °C.

### Comparative Example B: ink composition without low molecular weight gelling agent

Example 3 was repeated without Ammonyx SO. The amount of water was adapted accordingly, such that the ink composition was as follows:
- 10 weight% 2-pyrrolidone
- 10 weight% dimethylisosorbide ether;
- 0.25 weight% Tegowet 250
- 5 weight% Pro-jet Red OAM (obtained from Zeneca);
- 0.25 weight% NaCl; and
- 74.5 weight% water.

### Example 4: Ink composition according to the present invention

Example 3 was repeated without Tegowet 250. The amount of water was adapted accordingly, such that the ink composition was as follows:
- 1.0 weight% octadecyldimethylamine-oxide;
- 10 weight% 2-pyrrolidone
- 10 weight% dimethylisosorbide ether;
- 5 weight% Pro-jet Red OAM (obtained from Zeneca);
- 0.25 weight% NaCl; and
- 73.75 weight% water.

### Printing experiments

The inks of examples 3 and 4 and comparative example B were printed on IJM 614 and UPM gloss respectively, with the aid a Dimatix 10 pL printhead. The jetting temperature was 45°C and the substrate temperature was 22°C.

The table below shows a summary of the results:

| Fig. | Receiving substrate | Ink | Print quality (based on visual inspection) |
|---|---|---|---|
| 5A | IJM 614 | Comparative Example B | Excessive spreading, coalescence 'beading up' of printed lines |
| 5B | UPM Gloss | Comparative Example B | Excessive spreading, coalescence, bleeding, 'beading up' of printed lines |
| 6A | IJM 614 | Example 4 | Less spreading compared to ink of comparative example A, still some coalescence |
| 6B | UPM Gloss | Example 4 | Less spreading compared to ink of comparative example A |
| 7A | IJM 614 | Example 3 | Improved line quality clearly visible |
| 7B | UPM Gloss | Example 3 | Improved line quality clearly visible |

It can be concluded that the gelling property as introduced in the inks according to Examples 3 and 4, significantly improve print quality, relative to the ink composition of Comparative Example B. Without wanting to be bound to any theory it is thought that this is caused by a viscosity induced spreading break (increase of viscosity reduces spreading). The print quality can be further enhanced by tuning the surface tension of the ink composition, which can be seen by comparing examples 3 (with surfactant) and 4 (without surfactant). Without wanting to be bound to any theory it is thought that this is caused by optimizing the difference between the surface energy of the print substrate and the surface tension of the ink compostion.

## Claims

1. An aqueous ink composition comprising a low molecular weight gelling agent, being an organic amine oxide selected from the group consisting of C14-C22 alkylamine oxides, wherein the molecular weight of the gelling agent is between 200 gr/mol and 700 gr/mol, wherein the ink composition comprises dispersed polymer particles.

2. The aqueous ink composition according to claim 1, wherein the gelling agent is octadecyl dimethyl amine oxide.

3. The aqueous ink composition according to any one of the preceding claims, wherein the low molecular weight gelling agent is present in an amount of between 0.1 weight% and 2 weight% relative to the total ink composition.

4. The aqueous ink composition according to any one of the preceding claims, comprising a salt containing at least one cation selected from the group consisting of lithium, sodium, potassium, ammonium and substituted ammonium.

5. The aqueous ink composition according to any one of the preceding claims, comprising a salt containing at least one anion selected form the group consisting of fluoride, chloride, bromide, iodide, sulfate, nitrate, phosphate, organic carboxylates, organic sulfonates and organic sulfates.

6. The aqueous ink composition according to any one of claims 4-58, wherein the salt is present in an amount of between 0.05 weight% and 1.5 weight% relative to the total ink composition.

7. Use of an organic amine oxide having a molecular weight of between 200 gr/mol and 700 gr/mol as a low molecular weight gelling agent in an aqueous ink composition.

8. Use of octadecyl dimethyl amine oxide as a low molecular weight gelling agent in an aqueous ink composition.

9. A method of printing an ink composition according to any one of the claims 1-6, the method comprising the steps of:
1. Providing an ink composition according to the present invention, the ink composition having a gelling temperature T₁ and a gelling temperature window ΔT₁;
2. heating an imaging device containing the ink composition to a jetting temperature T₂, wherein T₂ satisfies the condition T2≥T₁+0.5*ΔT₁;
3. controlling the temperature of a receiving substrate at a temperature T₃, wherein T₃ satisfies the condition T3≤T₁-0.5*ΔT₁;
4. imagewise expelling ink droplets from the jetting device onto the temperature controlled recording substrate.

## Patentansprüche

1. Wässrige Tintenzusammensetzung mit einem Geliermittel mit niedrigem Molekulargewicht, bei dem es sich um ein organisches Aminoxid handelt, ausgewählt aus der Gruppe bestehend aus C14-C22 Alkylaminoxiden, wobei das Molekulargewicht des Geliermittels zwischen 200g/mol und 700 g/mol beträgt, wobei die Tintenzusammensetzung dispergierte Polymerpartikel enthält.

2. Wässrige Tintenzusammensetzung nach Anspruch 1, bei der das Geliermittel Octadecyl-Dimethylaminoxid ist.

3. Wässrige Tintenzusammensetzung nach einem der vorstehenden Ansprüche, bei der das Geliermittel mit niedrigem Molekulargewicht in einer Menge von 0,1 Gew.% bis 2 Gew.% bezogen auf die gesamte Tintenzusammensetzung vorhanden ist.

4. Wässrige Tintenzusammensetzung nach einem der vorstehenden Ansprüche, mit einem Salz, das wenigstens ein Kation aufweist, das ausgewählt ist aus der Gruppe bestehend aus Lithium, Natrium, Kalium, Ammonium und substituiertem Ammonium.

5. Wässrige Tintenzusammensetzung nach einem der vorstehenden Ansprüche, mit einem Salz, das wenigstens ein Anion enthält, das ausgewählt ist aus der Gruppe bestehend aus Fluorid, Chlorid, Bromid, Jodid, Sulfat, Nitrat, Phosphat, organischen Karboxylaten, organischen Sulfonaten und organischen Sulfaten.

6. Wässrige Tintenzusammensetzung nach einem der Ansprüche 4 bis 5, bei der das Salz in einer Menge von 0,05 Gew.% bis 1,5 Gew.% bezogen auf die gesamte Tintenzusammensetzung vorhanden ist.

7. Verwendung eines organischen Aminoxids mit einem Molekulargewicht zwischen 200 g/mol und 700 g/mol als Geliermittel mit niedrigen Molekulargewicht in einer wässrigen Tintenzusammensetzung.

8. Verwendung von Octadecyl-Dimethylaminoxid als Geliermittel mit niedrigem Molekulargewicht in einer wässrigen Tintenzusammensetzung.

9. Verfahren zum Drucken einer Tintenzusammensetzung nach einem der Ansprüche 4 bis 5, welches Verfahren die folgenden Schritte aufweist:
1. breitstellen einer Tintenzusammensetzung gemäß der Erfindung, wobei die Tintenzusammensetzung eine Geliertemperatur T₁ und ein Geliertemperaturfenster ΔT₁ hat;
2. erhitzen einer Bilderzeugungseinrichtung, die die Tintenzusammensetzung enthält, auf eine Strahltemperatur T₂, wobei T₂ die Bedingung T₂ ≥ T₁ + 0,5^{∗}ΔT₁ erfüllt;
3. einstellen der Temperatur eines Empfangssubstrats auf eine Temperatur T₃, wobei T₃ die Bedingung T₃ ≤ T₁ - 0,5∗ΔT₁ erfüllt;
4. bildmäßiges ausstoßen von Tröpfchen aus der Strahleinrichtung auf das temperaturgeregelte Aufzeichnungssubstrat.

## Revendications

1. Composition d'encre aqueuse comprenant un agent gélifiant de poids moléculaire bas, qui est un oxyde d'amine organique sélectionné dans le groupe consistant en les oxydes d'alkylamine en C14 à C22, dans laquelle le poids moléculaire de l'agent gélifiant est situé entre 200 g/mole et 700 g/mole, dans laquelle la composition d'encre comprend des particules polymères dispersées.

2. Composition d'encre aqueuse selon la revendication 1, dans laquelle l'agent gélifiant est l'oxyde d'octadécyl diméthyl amine.

3. Composition d'encre aqueuse selon l'une quelconque des revendications précédentes, dans laquelle l'agent gélifiant de poids moléculaire bas est présent en une quantité située entre 0,1 % en poids et 2 % en poids par rapport à la composition d'encre totale.

4. Composition d'encre aqueuse selon l'une quelconque des revendications précédentes, comprenant un sel contenant au moins un cation sélectionné dans le groupe consistant en le lithium, le sodium, le potassium, l'ammonium et un ammonium substitué.

5. Composition d'encre aqueuse selon l'une quelconque des revendications précédentes, comprenant un sel contenant au moins un anion sélectionné dans le groupe consistant en le fluorure, le chlorure, le bromure, l'iodure, le sulfate, le nitrate, le phosphate, les carboxylates organiques, les sulfonates organiques et les sulfates organiques.

6. Composition d'encre aqueuse selon l'une quelconque des revendications 4 à 5, dans laquelle le sel est présent en une quantité située entre 0,05 % en poids et 1,5 % en poids par rapport à la composition d'encre totale.

7. Utilisation d'un oxyde d'amine organique ayant un poids moléculaire situé entre 200 g/mole et 700 g/mole comme agent gélifiant de poids moléculaire bas dans une composition d'encre aqueuse.

8. Utilisation de l'oxyde d'octadécyl diméthyl amine comme agent gélifiant de poids moléculaire bas dans une composition d'encre aqueuse.

9. Procédé d'impression d'une composition d'encre selon l'une quelconque des revendications 1 à 6, le procédé comprenant les étapes suivantes :
1. la fourniture d'une composition d'encre selon la présente invention, la composition d'encre présentant une température de gélification T₁ et une fenêtre de températures de gélification ΔT₁;
2. le chauffage d'un dispositif d'imagerie contenant la composition d'encre jusqu'à une température de projection T₂, dans lequel T₂ satisfait la condition T₂ ≥ T₁ + 0,5^{∗}ΔT₁;
3. la régulation de la température d'un substrat de réception à une température T₃, dans lequel T₃ satisfait la condition T₃ ≤ T₁ + 0,5^{∗}ΔT₁ ;
4. l'expulsion suivant une image de gouttelettes d'encre à partir d'un dispositif de projection sur le substrat d'enregistrement à température régulée.
